# NEW EUROPEAN PATENT SPECIFICATION

(11) **EP 1 957 188 B2**
(45) Date of publication and mention of the opposition decision: **14.05.2014**
(45) Mention of the grant of the patent: 24.02.2010
(21) Application number: 06807831.0
(22) Date of filing: 23.11.2006
(51) Int. Cl.: B01F 17/00, C08J 3/075, C08J 3/12, B01F 17/16, B01F 17/34

(54) **A METHOD OF DRYING AN ABSORBENT POLYMER WITH A SURFACTANT**
VERFAHREN ZUM TROCKNEN EINES ABSORBIERENDEN POLYMERS MIT EINEM OBERFLÄCHENAKTIVEN MITTEL
PROCEDE DE SECHAGE D' UN POLYMERE ABSORBANT AU MOYEN D' UN TENSIOACTIF

(30) Priority: 30.11.2005 US 289865
(43) Date of publication of application: 20.08.2008
(73) Proprietor: BASF SE, 67056 Ludwigshafen (DE)
(72) Inventor: OTTEN, Jay Gregory, Brownstown Township, Mi 48192 (US); UTZ, Christopher G., Wyandotte, Mi 48192 (US); WOODRUM, Guy T., Suffolk, va 23435 (US)
(86) International application number: PCT/EP2006/068784
(87) International publication number: WO 2007/063019

(56) References cited:
- EP-A- 1 541 155
- EP-A1- 0 505 163
- EP-A1- 0 872 491
- EP-A2- 0 785 223
- EP-A2- 0 785 223
- WO-A1-03/002623
- WO-A1-03/031157
- WO-A1-2004/033574
- DE-A1- 2 412 266
- DE-A1- 19 505 171
- JP-A- 2000 143 720
- JP-A- 2001 213 914
- US-A- 6 001 911
- "Stable eye drops - comprise ester type nonionic surfactant, glycyrrhizinic acid and cyclodextrin" DERWENT, 16 December 1994 (1994-12-16), XP002179146
- A partial English translation of JP-A-2000-143720
- www.itoh-oilchem.co.jp/product/pdct02.html
- A partial English translation of JP-A-2001-213914
- www.panalytical.jp/tech//apps/xrd/sax_micro emulsion0409.html
- A partial English translation of a website ( www.panalytical.jp/tech/apps/xrd/sax_microe mulsion0409.html )

## Description

### BACKGROUND OF THE INVENTION

### 1. Field of the Invention

The present invention generally relates to a method of drying an absorbent polymer. More specifically, the present invention generally relates to a method of incorporating a surfactant with an absorbent polymer to increase drying efficiency of the absorbent polymer.

### 2. Description of the Related Art

Absorbent polymers, often referred to as "hydrogels," hydrogel-forming absorbent polymers, "super absorbents" or SAPs, absorbent gel materials or AGMs, or "hydrocolloid" material, have found widespread use in many applications, most notably in diapers and other sanitary articles to absorb body fluids. The absorbent polymers may also be used in wiping cloths, water-retaining agents, dehydrating agents, sludge coagulants, disposable towels, bath mats, and door mats, thickening agents, disposable litter mats for pets, condensation-preventing agents, and release control agents for various chemicals. Such absorbent polymers are discussed, for example, in U.S. Patent No. 3,699,103 to Harper et al., U.S. Patent Nos. 5,669,894 and 5,599,335 to Goldman et al., and U.S. Patent No. 3,770,731 to Harmon.

These absorbent polymers are available in a variety of chemical forms, including substituted and unsubstituted natural and synthetic polymers, such as cross-linked polymers of unsaturated molecules, (co)polymerized unsaturated molecules, graft(co)polymers of one or more unsaturated molecule on an appropriate graft base, cross-linked cellulose ethers or starch ethers, natural products, for example guar derivatives, which can be swollen in aqueous liquids and which may be in chemically modified form, and combinations thereof. Among the most common absorbent polymers are cross-linked polyacrylates, which are generally made by polymerizing unsaturated carboxylic acids, such as acrylic acid, or derivatives of unsaturated carboxylic acids such as alkali metal or ammonium salts of acrylic acid, and alkyl acrylates. These polymers, which are water-soluble, are rendered water-insoluble by cross-linking the carboxyl group-containing polymer chains with a small amount of conventional di- or poly-functional monomer materials, such as N,N'-methylene-bisacrylamide, trimethylolpropane-triacrylate or triallylamine. The cross-linked polyacrylate still comprises charged carboxyl groups. The charged carboxyl groups enable the cross-linked polyacrylate to be water-swellable, i.e., the cross-linked polyacrylate can absorb body fluids as a result of osmotic forces, thus forming the hydrogel with the fluids.

The absorbent polymers are generally formed in an aqueous solution. As such, the resulting absorbent polymers absorb the aqueous solution, which is usually water, and require drying in order to be useful in the contemplated applications. To facilitate drying of the absorbent polymer, the absorbent polymer is typically comminuted to increase a surface area of the absorbent polymer for accelerating drying.

Drum drying, which permits rapid drying without detriment to the absorbent polymer, is one common method used for drying the absorbent polymer. In drum drying, the comminuted absorbent polymer is fed through parallel nozzles onto a rotating drum. The absorbent polymer is spread onto a surface of the drum using an applicator roll under exertion of pressure. During spreading, the goal is to form an absorbent polymer film of maximum homogeneity in order to utilize as much of the surface and to achieve uniform drying of the absorbent polymer, which results in maximized drying efficiency. In the course of one rotation of the drum, the absorbent polymer film is dried and is parted from the surface of the drum with the aid of a fixed blade. To ensure that the absorbent polymer is sufficiently dried before being parted from the surface of the drum after the one rotation, a balance is struck between surface temperature of the drum, which is from 100 to 250°C, and a speed of rotation of the drum, which is from 0.1 to 5 rpm. The exact surface temperature and speed of rotation depend on individual process considerations.

In conventional drum drying processes, the comminuted absorbent polymer is conveyed through a pipeline system that leads to the applicator nozzles. The comminuted absorbent polymer is pressed out through the applicator nozzles at high pressures, which leads to mechanical problems. Furthermore, a solids concentration of the comminuted absorbent polymer has to be below 20 parts by weight in order to enable the applicator roll to form the absorbent polymer film of maximum homogeneity. At higher solids concentrations, the applicator roll instead forms an absorbent polymer film of varying thickness, with thicker areas of the absorbent polymer film requiring extra drying time. As a result, the capacity of the dryer is not fully utilized, and drying efficiency of the absorbent polymer is poor.

U.S. Patent No. 5,945,495 to Daniel et al. discloses a way to increase drying efficiency of the absorbent polymer by incorporating a surfactant into the absorbent polymer. The surfactant, i.e., surface active agent, includes a hydrophilic group and a hydrophobic group. The surfactant is formed from a polyhydric molecule, i.e., a molecule having more than one hydroxyl group, such as sorbitan. The hydroxyl groups are the hydrophilic groups, and the hydrophobic group is a C₁₀ to C₂₄ ester group. The ester group is formed through esterification of one of the hydroxyl groups with a fatty acid, such as lauric acid. A granular rheology of the comminuted absorbent polymer was improved through the addition of the surfactant. More specifically, after adding the surfactant to the absorbent polymer, pumpability of the comminuted absorbent polymer through the pipeline leading to the surface of the dryer is improved, as is the spreadability of the comminuted absorbent polymer on the surface of the dryer through use of the applicator roll.

Despite the gains made to date in improving the drying efficiency of the absorbent polymer with the surfactant, there still remains an opportunity to further increase the drying efficiency of the absorbent polymer.

### SUMMARY OF THE INVENTION AND ADVANTAGES

The subject invention provides a method of drying an absorbent polymer and a method of treating a surfactant. The method of drying the absorbent polymer includes providing the absorbent polymer. A surfactant having a C₁₀ to C₂₄ ester group is incorporated with the absorbent polymer. The acid value of the surfactant is increased to further increase drying efficiency of the absorbent polymer. The acid value of the surfactant is increased by at least 0.5 KOH/g by adding an acid to the surfactant prior to incorporating the surfactant with the absorbent polymer. More specifically, after increasing the acid value of the surfactant, the absorbent polymer exhibits improved pumpability and spreadability, as compared to absorbent polymers including the surfactant without having the increased acid value.

### DETAILED DESCRIPTION OF THE PREFERRED EMBODIMENT

In accordance with the subject invention, a method of drying an absorbent polymer includes providing the absorbent polymer. Absorbent polymers, as used herein, may also be referred to as "hydrogels," hydrogel-forming absorbent polymers, "super absorbents" or SAPs, absorbent gel materials or AGMs, or "hydrocolloid" material. The absorbent polymers are useful in many applications, most notably in diapers and other sanitary articles to absorb body fluids. The absorbent polymers may also be used in wiping cloths, water-retaining agents, dehydrating agents, sludge coagulants, disposable towels, bath mats, and door mats, thickening agents, disposable litter mats for pets, condensation-preventing agents, and release control agents for various chemicals.

Suitable absorbent polymers for purposes of the subject invention include cross-linked polymers of unsaturated molecules, (co)polymerized unsaturated molecules, graft (co)polymers of one or more unsaturated molecule on an appropriate graft base, cross-linked cellulose ethers or starch ethers, natural products, for example guar derivatives, which can be swollen in aqueous liquids and which may be in chemically modified form, and combinations thereof. All of the aforementioned absorbent polymers are known in the art.

For purposes of the subject invention, the step of providing the absorbent polymer typically includes polymerizing an unsaturated molecule to form the absorbent polymer. However, it is to be appreciated that the absorbent polymer may be obtained from a supplier, after polymerization of the unsaturated molecule, and the method of drying of the subject invention may be performed at a different site from the site of polymerization of the unsaturated molecule.

Examples of unsaturated molecules suitable for preparing the absorbent polymers include, but are not limited to, a polymerizable acid, such as acrylic acid, methacrylic acid, vinylsulfonic acid, vinylphosphonic acid, maleic acid (including its anhydride), fumaric acid, itaconic acid, 2-acrylamido-2-methylpropanesulfonic acid, 2-acrylamido-2-methylpropanephosphonic acid, an amide of a polymerizable acid, such as N,N-dimethylacrylamide, an amino- or ammonium group-containing ester or amide, such as dialkylaminoalkyl esters, a hydroxyalkyl ester, a carboxylic acid salt, such as sodium maleate, a trimethyl amine, a quaternary ammonium salt, such as N,N,N-trialkyl-N-(methyl) acryloyloxyalkylammonium salts, a sulfonic acid, such as vinyl sulfonic acid, and combinations thereof. Typically, acrylic and methacrylic acids are used as the unsaturated molecules that are polymerized to form the absorbent polymer, which is a polyacrylate or polymethacrylate, respectively.

Alternatively, as mention above, suitable absorbent polymers are also obtainable by graft copolymerization of the unsaturated molecules on the appropriate graft base. Suitable graft bases may be natural or synthetic in origin, specific examples of which include starch, cellulose or cellulose derivatives, and other polysaccharides and oligosaccharides, polyalkylene oxides, especially polyethylene oxides and polypropylene oxides, hydrophilic polyesters, and combinations thereof

Typically, a cross-linking agent and the unsaturated molecules are reacted. More specifically, the cross-linking agents are typically incorporated by polymerization into the absorbent polymer during polymerization of the unsaturated monomer. The cross-linking agent renders the absorbent polymer, which would otherwise be water-soluble, water-insoluble while retaining the ability to absorb fluids.

Suitable cross-linking agents include, but are not limited to, methylenebisacrylamide and methylenebismethacrylamide, esters of unsaturated mono- or polycarboxylic acids with polyols such as butanediol or ethylene glycol diacrylate or dimethacrylate, and trimethylolpropane triacrylate and allyl compounds such as allyl(meth)acrylate, triallyl cyanurate, diallyl maleate, polyallyl esters such as pentaerythritol triallyl ether, tetraallyloxyethane, triallylamine, tetraallylethylenediamine, allyl esters of phosphoric acid, vinylphosphonic acid derivatives, and combinations thereof.

The cross-linking agent is used in a stoichiometrically insufficient amount to react with functional groups of the unsaturated molecules, thereby leaving unreacted functional groups in the absorbent polymer. The unreacted functional groups enable the absorbent polymer to absorb the fluids. Preferably, the cross-linking agent is included in an amount of from 0.1 to 5 parts by weight, typically about 0.5 parts by weight, based on the total weight of the absorbent polymer.

Polymerization techniques for forming the absorbent polymers are known in the art. In particular, polymerization typically occurs in aqueous solution through gel polymerization. In gel polymerization, from 15 to 50% by weight aqueous solutions of one or more unsaturated molecules, the cross-linking agent, and, if desired, an appropriate graft base are polymerized in the presence of a free-radical initiator with utilization of the Trommdorff-Norrish effect (Bios Final Rep. 363.22; Makromol. Chem. 1 (1947) 169.

Suitable initiators include organic peroxides, such as benzoyl peroxide, tert-butyl hydroperoxide, methyl ethyl ketone peroxide, cumene hydroperoxide, azo compounds such as azodiisobutyronitrile, inorganic peroxy compounds such as (NH₄)₂S₂O₈ or K₂S₂O₈ or H₂O₂, alone or in combination with reducing agents such as sodium hydrogen sulfite and iron(II) sulfate, or redox systems whose reducing component comprises an aliphatic or aromatic sulfinic acid such as benzenesulfinic acid and toluenesulfinic acid and derivatives of these acids such as, for example, Mannich adducts of sulfinic acid, aldehydes, and amino compounds. Alternatively, polymerization can be initiated using high-energy electromagnetic rays.

The polymerization typically occurs within a temperature range of from 0 °C to 150 °C, preferably from 10 °C to 100 °C. As is customary, the polymerization can also be conducted in an inert-gas atmosphere, such as under nitrogen.

After polymerization, the absorbent polymer is bound with the aqueous solution in which it was formed. As such, the absorbent polymer must be dried to render the absorbent polymer commercially useable. In order to dry the absorbent polymer, the absorbent polymer that is bound with the aqueous solution is typically transported to a contact dryer. Since, the absorbent polymer is in hydrogel form and does not easily flow, the absorbent polymer is comminuted into granules. The granules of the absorbent polymer are more easily pumped through a pipeline to the contact dryer. The contact dryer may be a drum dryer or any other type of dryer known in the art for drying absorbent polymers.

A surfactant having a C₁₀ to C₂₄ ester group is incorporated with the absorbent polymer to increase drying efficiency of the absorbent polymer. It is hypothesized that the surfactant improves a rheology of the granules of absorbent polymer and further acts as a lubricant to allow higher and more viscous polymer solids to be conveyed under the same pump pressures, as compared to absorbent polymers that do not include the surfactant. More specifically, after adding the surfactant to the absorbent polymer, pumpability of the granules through the pipeline leading to the surface of the contact dryer is improved, as is the spreadability of the granules on the surface of the contact dryer through use of an applicator roll. The improved pumpability and spreadability allows a higher solids content of the absorbent polymer in aqueous solution to be pumped through the pipeline and effectively spread onto the surface of the contact dryer without increasing pumping pressures. As a result of the higher solids content, more absorbent polymer may be dried and, thus, drying efficiency is increased.

The surfactant, i.e., surface active agent, includes a hydrophilic group and a hydrophobic group. The surfactant may be further defined as a polyhydric molecule, i.e., a molecule having more than one hydroxyl group. More specifically, the hydroxyl groups are the hydrophilic groups, and the hydrophobic group is the C₁₀ to C₂₄ ester group.

Suitable surfactants include, but are not limited to, anhydrides of sugar alcohols having at least 3 hydroxyl groups and that are partially esterified with C₁₀ to C₂₄ fatty acids. The polyhydric molecule typically includes an anhydride of a sugar alcohol having at least 3 hydroxyl groups. The remaining hydroxyl groups, after partial esterification, can be reacted with from 2 to 20 mol of an alkylene oxide such as ethylene oxide.

Examples of anhydrides of sugar alcohols, which are partially esterified and, if desired, alkoxylated, include those selected from the group of, but not limited to, sorbitol, mannitol, xylitol, maltitol, lactitol, erythritol, pentaerythritol, and combinations thereof. An example of an anhydride of the sugar alcohol is sorbitan, which is the anhydride of sorbitol and typically has the following structure:

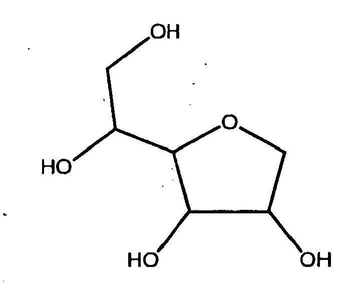

The anhydrides of the sugar alcohols are partially esterified with the C₁₀ to C₂₄ fatty acids. The C₁₀ to C₂₄ fatty acid preferably has the following structure: 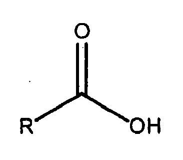 wherein R is selected from the group of aliphatic groups and olefinic groups each having from 9 to 23 carbon atoms. Specific examples of fatty acid that may be used in the esterification include capric acid, neodecanoic acid, pentanedecanoic acid, neooctanoic acid, lauric acid, myristic acid, myristooleic acid, palmitic acid, margaric acid, stearic acid, oleic acid, linoleic acid, arachidic acid, and combinations thereof. Esterification with the fatty acids goes only so far as to leave at least one OH group of the polyhydric alcohol unesterified. For example, when only one of the hydroxyl groups is esterified with lauric acid, the surfactant is a mixture of esters containing primarily sorbitan monolaurate (shown below), a sorbitan fatty acid ester, and smaller amounts of di-and trimesters.

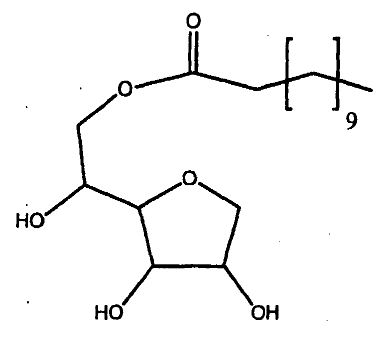

Examples of other suitable fatty acid esters include, but are not limited to, sorbitan monooleate, sortbitan trioleate, sorbitan monostearate sorbitan tristearate, mannitol monooleate, glycerol monooleate, and glycerol dioleate.

The abovementioned fatty acid esters still contain at least one free hydroxyl group. As alluded to above, the fatty acid esters may be alkoxylated. More, specifically, the free hydroxyl group(s) can be reacted further with ethylene oxide, propylene oxide or mixtures of ethylene oxide and propylene oxide. For each mole of fatty acid ester it is preferred to use from 2 to 20 mol of the alkylene oxide. One example of an alkoxylated surfactant is ethoxylated sorbitan fatty acid ester having about 20 moles of ethylene oxide per mole of the sorbitan fatty acid ester, commercially available from BASF Corporation of Florham Park, NJ.

Preferably, the surfactants are employed in amounts of from 0.01 to 5 parts by weight, more preferably from 0.02 to 2% by weight, based on the total solids content of the absorbent polymer to be dried.

The surfactant can be incorporated in various ways into the absorbent polymer. For one, the surfactant can be incorporated with the unsaturated molecule prior to polymerization, so that after polymerization the surfactant is already present in the absorbent polymer. Another option is to incorporate the surfactant into the comminuted absorbent polymer, either during or after its comminution, by using an appropriate apparatus, such as a mincer.

In accordance with the subject invention, it has been found that even more improved pumpability and spreadability, and thus higher drying efficiency of the absorbent polymer, is achieved by increasing the acid value of the surfactant. An acid is added to the surfactant to increase the acid value, by at least 0.5 mg KOH/g.

The surfactant is typically manufactured and provided having a range of acid values. The acid value of the surfactant is affected by trace amounts of fatty acid present therein, which are formed from the ester groups of the surfactant due to hydrolysis from trace amounts of water within the surfactant.

Preferably, the acid that is added to the surfactant is a fatty acid, which immediately increases the acid value of the surfactant upon addition. Although not required to be, the fatty acid incorporated into the surfactant to increase the acid value is preferably the same fatty acid that was used to form the surfactant. More specifically, the fatty acid, as above, has the structure: 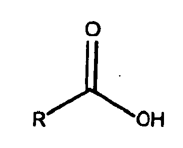 wherein R is selected from the group of aliphatic groups and olefinic groups each having from 9 to 23 carbon atoms. The fatty acid may be the same as any of those mentioned above for esterifying the anhydrides of the sugar alcohols.

Typically, only relatively small amounts of fatty acid need be added to the surfactant to sufficiently increase the acid value of the surfactant. More specifically, the fatty acid is typically added in an amount of at least 0.5 parts by weight, preferably about 0.8 parts by weight, based on the total weight of the surfactant.

The acid is added to the surfactant prior to incorporating the surfactant with the absorbent polymer.

As a result of increasing the acid value of the surfactant, process efficiency of the production of the absorbent polymer is increased by up to 10%. More specifically, the increase in process efficiency is measured according to a difference pump rates and spreadability of the absorbent polymer produced in accordance with the subject invention and the absorbent polymer produced according to methods of the prior art. The pump rate is measured in terms of a pump pressure required to convey 1000 kg/hr through the pipeline. The absorbent polymer produced in accordance with the subject invention requires at least 2 bar less pressure to convey 1000 kg/hr of the absorbent polymer through the pipeline than absorbent polymer including surfactant that has not been subjected to an increase in acid value. Spreadability is measured by placing a 30 g sample of the absorbent polymer in a press, taking note of an outer boundary of the absorbent polymer, and subjecting the absorbent polymer to a pressure of 2 bar for 15 seconds. Absorbent polymer including the surfactant that has not been subjected to an increase in acid value is pressed, and a spread distance of the absorbent polymer, from the initial outer boundary of the absorbent polymer to the outer boundary after spreading, is measured and set as a baseline for further spreadability tests for the absorbent polymer produced according to the method of the subject invention. The absorbent polymer produced in accordance with the subject invention is then placed in the press and the spread distance is measured. The absorbent polymer produced in accordance with the subject invention spreads at least 1.11 times further than the absorbent polymers including the surfactant that has not been subjected to an increase in acid value.

The following examples, illustrating improvements in drying efficiency of absorbent polymers after having incorporated the surfactant into the absorbent polymers and increased the acid value of the surfactant, are meant to illustrate and not limit the subject invention.

### EXAMPLE 1

4 parts of Pentaerythritol Triallyl Ether are added to 800 parts by weight of acrylic acid. This mixture is then diluted with 2236 parts by weight of DI water and placed into an insulated reactor. Additionally, a surfactant is also added to the insulated reactor. More specifically, T-MAZ® 20 ethoxylated sorbitan monolaurate surfactant is used, and 0.8% by weight lauric acid, based on the weight of the T-MAZ® 20, is added to the T-MAZ® 20 to increase the acid value of the T-MAZ® 20 from about 0.6 mg KOH/g to about 2.5 mg KOH/g. About 0.2% by weight of the T-MAZ® 20 is then added to the reactor. Nitrogen is then blown through the reaction mixture to reduce the dissolved oxygen content to 1 ppm or less. The temperature of the reaction mixture is controlled at 10 °C. The following initiators are added in the sequence stated:
0.008 parts by weight of ascorbic acid;
0.016 parts by weight of a 35% by weight aqueous hydrogen peroxide solution.

After an induction phase of 5 minutes, polymerization begins and a maximum temperature of 85 °C is reached over the course of an hour. The absorbent polymer thus obtained, which is in hydrogel form, is held in the reactor for another 2 hours, in order to further reduce the residual acrylic acid level. The absorbent polymer is then comminuted in a mincer, after which 644.38 parts of a 50% by weight sodium hydroxide solution are added to the absorbent polymer. Before adding the sodium hydroxide solution, the temperature of the absorbent polymer is approximately 60 °C and the temperature of the sodium hydroxide solution is 38 °C. Fine grains of the absorbent polymer are admixed with the mechanically comminuted absorbent polymer. More specifically, the fine grains are particles of the absorbent polymer with a diameter of less than or equal to 0.090 mm. The fine grains are a byproduct of the comminuting and are often lost during production. About 0.8 parts of fine grains, made into a paste beforehand with 0.5 part of water, are mixed into 10 parts of mechanically comminuted polymer (22.5% by weight solids). The absorbent polymer is passed through the mincer again in order to ensure good mixing of the absorbent polymer with the sodium hydroxide solution, and thus homogeneous neutralization of the absorbent polymer. Due to the homogenous neutralization, which is an exothermic reaction, the absorbent polymer has a temperature of from 75 to 80°C.

The mechanically comminuted absorbent polymer prepared in this way is conveyed through the pipeline constructed to transport the absorbent polymer to a drum dryer. The absorbent polymer is transported with the aid of a pump, which can develop a maximum pipeline pressure of 45 bar. In this case, a pump pressure of 30 bar establishes a rate of conveyance of 6415 kg/h per drum dryer.

30 g of the mechanically comminuted absorbent polymer is then placed in a press and the absorbent polymer is subjected to a pressure of 2 bar for 15 seconds. A spread distance of the absorbent polymer is then measured, and is about 8.9 cm

### EXAMPLE 2

An absorbent polymer is prepared in the same way as described above in Example 1, except that instead of about 0.8 parts fine grains per 10 parts of mechanically comminuted polymer, about 0.85 parts fine grains are mixed into 10 parts of the mechanically comminuted polymer. The mechanically comminuted absorbent polymer is conveyed through the pipeline again with the aid of the pump at a pump pressure of 35 bar. In this case, the pump pressure of 35 bar establishes a rate of conveyance of 6607 kg/h per drum dryer. The benefit that is gained by the higher pump pressure is that although no substantial change in overall efficiency results when compared to Example 1, wherein the polymer is conveyed at the pump pressure of 30 bar, the drying rate is increased due to higher active polymer solids contained in the polymer that is fed through the pipeline to the drum dryer.

### REFERENCE EXAMPLE 3

An absorbent polymer is prepared in the same way as described above in Example 1, except the lauric acid is not added to the T-MAZ® 20. Instead, the T-MAZ® 20, as manufactured, is allowed to hydrolyze by storing the T-MAZ® 20 for a period of about 3 years. Due to hydrolysis, the acid value of the T-MAZ® 20 is increased from about 0.6 mg KOH/g to about 2.5 mg KOH/g. In this case, a pump pressure of 31 bar establishes a rate of conveyance of about 6440 kg/h, and spread distance is about 9.0 cm.

### COMPARATIVE EXAMPLE

An absorbent polymer is prepared in the same way as described above in Example 1, except the lauric acid is not added to the T-MAZ® 20, and the T-MAZ® 20 is relatively unhydrolyzed. In other words, the T-MAZ® 20 having the acid value of about 0.6 mg KOH/g is added to the reaction mixture in the insulated reactor. In this case, a pump pressure of 31 bar establishes a rate conveyance of 5990 kg/h, and a spread distance of about 8.0 cm.

As is evident through comparison of the pump pressures required for absorbent polymers produced in accordance with the subject with the pump pressures required for the comparative example, about 7.0% more polymer is fed to the dryers which correlates to a greater volume of absorbent polymer produced in accordance with the subject invention. Furthermore, the spread distances the absorbent polymers of the subject invention are at least 1.4 times greater than the spread distances of the absorbent polymer of the comparative example. As a result of the lesser amount of pump pressure required to pump the absorbent polymer produced in accordance with the subject invention, along with greater spread distances, as compared to the absorbent polymer of the comparative example, about 10% greater drying efficiency is achieved with the absorbent polymer produced in accordance with the subject invention.

## Claims

1. A method of drying an absorbent polymer comprising the steps of;
providing the absorbent polymer,
incorporating a surfactant having a C₁₀ to C₂₄ ester group with the absorbent polymer, and
increasing an acid value of the surfactant by at least 0.5 mg KOH/g, wherein the step of increasing the acid value of the surfactant comprises adding an acid to the surfactant prior to incorporating the surfactant with the absorbent polymer.

2. A method as set forth in claim 1 wherein the step of adding the acid comprises adding a fatty acid having the structure: 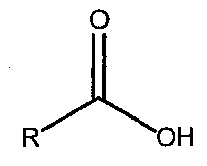 wherein R is selected from the group of aliphatic groups and olefinic groups each having from 9 to 23 carbon atoms.

3. A method as set forth in claim 2 wherein the fatty acid is selected from the group of capric acid, neodecanoic acid, pentanedecanoic acid, neooctanoic acid, lauric acid, myristic acid, myristooleic acid, palmitic acid, margaric acid, stearic acid, oleic acid, linoleic acid, arachidic acid, and combinations thereof.

4. A method as set forth in claim 2 wherein the fatty acid is added in an amount of at least 0.5 parts by weight based on the total weight of the surfactant.

5. A method as set forth in claim 1 wherein the surfactant is further defined as a polyhydric molecule having a C₁₀ to C₂₄ ester group.

6. A method as set forth in claim 5 wherein the polyhydric molecule comprises an anhydride of a sugar alcohol having at least 3 hydroxyl groups.

7. A method as set forth in claim 6 wherein the sugar alcohol is selected from the group of sorbitol, glycerol, mannitol, xylitol, maltitol, lactitol, erythritol, pentaerythritol, and combinations thereof.

8. A method as set forth in claim 7 wherein the surfactant comprises a sorbitan fatty acid ester.

9. A method as set forth in claim 8 wherein the sorbitan fatty acid ester is further defined as an alkoxylated sorbitan fatty acid ester having about 20 moles of alkylene oxide per mole of the sorbitan fatty acid ester.

10. A method as set forth in claim 1 wherein the step of providing the absorbent polymer comprises polymerizing an unsaturated molecule selected from the group of a polymerizable acid, an amide of a polymerizable acid, amino- or ammonium group-containing esters and amides, hydroxyalkyl esters, a carboxylic acid salt, a trimethyl amine, a quaternary ammonium salt, a sulfonic acid, and combinations thereof to form the absorbent polymer.

11. A method as set forth in claim 10 wherein the step of providing the absorbent polymer further comprises reacting a cross-linking agent and the unsaturated molecule.

12. A method as set forth in claim 10 wherein the step of incorporating the surfactant with the absorbent polymer comprises incorporating the surfactant with the unsaturated molecule prior to polymerization.

13. A method as set forth in claim 10 further comprising the step of comminuting the absorbent polymer.

14. A method as set forth in claim 13 further comprising the step of drying the comminuted absorbent polymer on a surface of a contact dryer.

15. A method as set forth in claim 1 further comprising the step of comminuting the absorbent polymer.

16. A method as set forth in claim 15 wherein the step of incorporating the surfactant with the absorbent polymer comprises incorporating the surfactant with the comminuted absorbent polymer.

17. A method as set forth in claim 16 further comprising the step of drying the comminuted absorbent polymer on a surface of a contact dryer.

## Patentansprüche

1. Verfahren zum Trocknen eines absorbierenden Polymers, bei dem man das absorbierende Polymer bereitstellt, ein Tensid mit einer C₁₀- bis C₂₄-Estergruppe zusetzt und eine Säurezahl des Tensids um mindestens 0,5 mg KOH/g erhöht, bei dem man zur Erhöhung der Säurezahl des Tensids dem Tensid noch vor Zusatz zum absorbierenden Polymer eine Säure zusetzt.

2. Verfahren nach Anspruch 1, bei dem man als Säure eine Fettsäure der Struktur: 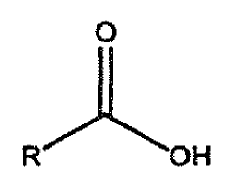 worin R aus der Gruppe der aliphatischen Gruppen und olefinischen Gruppen mit jeweils 9 bis 23 Kohlenstoffatomen ausgewählt ist, zusetzt.

3. Verfahren nach Anspruch 2, bei dem man die Fettsäure auswählt aus der Gruppe Caprinsäure, Neodecansäure, Pentandecansäure, Neooctansäure, Laurinsäure, Myristinsäure, Myristooleinsäure, Palmitinsäure, Margarinsäure, Stearinsäure, Oleinsäure, Linoleinsäure, Arachidinsäure und deren Kombinationen.

4. Verfahren nach Anspruch 2, bei dem man die Fettsäure in einer auf das Gesamtgewicht des Tensids bezogenen Menge von mindestens 0,5 Gewichtsteilen zusetzt.

5. Verfahren nach Anspruch 1, bei dem man als Tensid ein mehrere Hydroxygruppen aufweisendes Molekül mit einer C₁₀- bis C₂₄-Estergruppe zusetzt.

6. Verfahren nach Anspruch 5, bei dem man als das mehrere Hydroxygruppen aufweisende Molekül ein Anhydrid eines Zuckeralkohols mit mindestens drei Hydroxygruppen einsetzt.

7. Verfahren nach Anspruch 6, bei dem man den Zuckeralkohol auswählt aus der Gruppe Sorbit, Glycerin, Mannit, Xylit, Maltit, Lactit, Erythrit, Pentaerythrit und deren Kombinationen.

8. Verfahren nach Anspruch 7, bei dem man als Tensid einen Sorbitanfettsäureester zusetzt.

9. Verfahren nach Anspruch 8, bei dem man als Sorbitanfettsäureester einen alkoxylierten Sorbitanfettsäureester mit etwa 20 Mol Alkylenoxid pro Mol des Sorbitanfettsäureesters zusetzt.

10. Verfahren nach Anspruch 1, bei dem man zur Bereitstellung des absorbierenden Polymers ein ungesättigtes Molekül aus der Gruppe bestehend aus einer polymerisierbaren Säure, einem Amid einer polymerisierbaren Säure, amino- oder ammoniumgruppenhaltigen Estern und Amiden, Hydroxyalkylestern, einem Carbonsäuresalz, einem Trimethylamin, einem quaternären Ammoniumsalz, einer Sulfonsäure und deren Kombinationen zum absorbierenden Polymer polymerisiert.

11. Verfahren nach Anspruch 10, bei dem man zur Bereitstellung des absorbierenden Polymers zusätzlich ein Vernetzungsmittel und das ungesättigte Molekül umsetzt.

12. Verfahren nach Anspruch 10, bei dem man das Tensid dem ungesättigten Molekül noch vor der Polymerisation zusetzt.

13. Verfahren nach Anspruch 10, bei dem man ferner das absorbierende Polymer zerkleinert.

14. Verfahren nach Anspruch 13, bei dem man ferner das zerkleinerte absorbierende Polymer auf einer Oberfläche eines Kontakttrockners trocknet.

15. Verfahren nach Anspruch 1, bei dem man ferner das absorbierende Polymer zerkleinert.

16. Verfahren nach Anspruch 15, bei dem man das Tensid dem zerkleinerten absorbierenden Polymer zusetzt.

17. Verfahren nach Anspruch 16, bei dem man ferner das zerkleinerte absorbierende Polymer auf einer Oberfläche eines Kontakttrockners trocknet.

## Revendications

1. Procédé de séchage d'un polymère absorbant, comprenant les étapes qui consistent à :
fournir le polymère absorbant,
incorporer un tensioactif comportant un groupe ester C₁₀ à C₂₄ avec le polymère absorbant, et
augmenter un indice d'acide du tensioactif d'au moins 0,5 mg KOH/g, dans lequel l'étape d'augmentation de l'indice d'acide du tensioactif comprend l'addition d'un acide au tensioactif avant l'incorporation du tensioactif avec le polymère absorbant.

2. Procédé selon la revendication 1, dans lequel l'étape d'addition de l'acide comprend l'addition d'un acide gras ayant la structure : 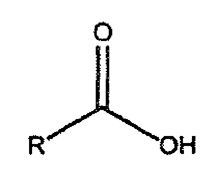 dans laquelle R est sélectionné dans le groupe constitué de groupes aliphatiques et de groupes oléfiniques contenant chacun de 9 à 23 atomes de carbone.

3. Procédé selon la revendication 2, dans lequel l'acide gras est sélectionné dans le groupe constitué de l'acide caprique, de l'acide néodécanoïque, de l'acide pentanedécanoïque, de l'acide néooctanoïque, de l'acide laurique, de l'acide myristique, de l'acide myristooléique, de l'acide palmitique, de l'acide margarique, de l'acide stéarique, de l'acide oléique, de l'acide linoléique, de l'acide arachidique, et de combinaisons de ceux-ci.

4. Procédé selon la revendication 2, dans lequel l'acide gras est ajouté dans une quantité d'au moins 0,5 partie pondérale relativement au poids total du tensioactif.

5. Procédé selon la revendication 1, dans lequel le tensioactif est défini en outre comme une molécule polyhydrique comportant un groupe ester C₁₀ à C₂₄.

6. Procédé selon la revendication 5, dans lequel la molécule polyhydrique comprend un anhydride d'un sucre-alcool comportant au moins 3 groupes hydroxyle.

7. Procédé selon la revendication 6, dans lequel le sucre-alcool est sélectionné dans le groupe constitué du sorbitol, du glycérol, du mannitol, du xylitol, du maltitol, du lactitol, de l'érythritol, du pentaérythritol, et de combinaisons de ceux-ci.

8. Procédé selon la revendication 7, dans lequel le tensioactif comprend un ester d'acide gras de sorbitane.

9. Procédé selon la revendication 8, dans lequel l'ester d'acide gras de sorbitane est défini en outre comme un ester d'acide gras de sorbitane alkoxylé comportant environ 20 moles d'oxyde d'alkylène par mole de l'ester d'acide gras de sorbitane.

10. Procédé selon la revendication 1, dans lequel l'étape de fourniture du polymère absorbant comprend la polymérisation d'une molécule insaturée sélectionnée dans le groupe constitué d'un acide polymérisable, d'un amide d'un acide polymérisable, d'esters et d'amides contenant un groupe amino ou ammonium, d'esters d'hydroxyalkyles, d'un sel d'acide carboxylique, d'une triméthylamine, d'un sel d'ammonium quaternaire, d'un acide sulfonique, et de combinaisons de ceux-ci, pour former le polymère absorbant.

11. Procédé selon la revendication 10, dans lequel l'étape de fourniture du polymère absorbant comprend en outre le fait de faire réagir un agent de réticulation et la molécule insaturée.

12. Procédé selon la revendication 10, dans lequel l'étape d'incorporation du tensioactif avec le polymère absorbant comprend l'incorporation du tensioactif avec la molécule insaturée avant la polymérisation.

13. Procédé selon la revendication 10, comprenant en outre l'étape de broyage du polymère absorbant.

14. Procédé selon la revendication 13, comprenant en outre l'étape de séchage du polymère absorbant broyé sur une surface d'un sécheur par contact.

15. Procédé selon la revendication 1, comprenant en outre l'étape de broyage du polymère absorbant.

16. Procédé selon la revendication 15, dans lequel l'étape d'incorporation du tensioactif avec le polymère absorbant comprend l'incorporation du tensioactif avec le polymère absorbant broyé.

17. Procédé selon la revendication 16, comprenant en outre l'étape de séchage du polymère absorbant broyé sur une surface d'un sécheur par contact.
